# EUROPÄISCHE PATENTANMELDUNG

(11) **EP 1 039 549 A1**
(43) Veröffentlichungstag der Anmeldung: **27.09.2000**
(21) Anmeldenummer: 99105620.1
(22) Anmeldetag: 19.03.1999
(51) Int. Cl.: H01L 31/042, E04D 13/18

(54) **Befestigungssystem für plattenförmige Bauelemente**

(71) Anmelder: Lafarge Braas Roofing Accessories GmbH & Co., 61437 Oberursel (DE)
(72) Erfinder: Rösler, Norbert, 61440 Oberursel (DE)
(74) Vertreter: Brüning, Rolf, Dr.rer.nat.

(57) **Zusammenfassung**

Die Erfindung betrifft ein Befestigungssystem (10) für schuppenartig überdeckend auf zumindest zwei parallel zueinander angeordneten Trägerelementen (20) verlegbare plattenförmige Bauelemente (12, 14, 16, 18), wobei der überdeckte Randabschnitt (22) eines Bauelements (14) auf dem Trägerelement (20) aufliegt und wobei die Trägerelemente (20) Halteelemente (26) aufweisen, die den überdeckenden Rand (28) des Bauelements (12) umgreifen können. Es wird vorgeschlagen, daß die Trägerelemente (20) ein in einer Ebene liegendes Trägersystem bilden, daß das Halteelement (26) eine Auflagefläche (42) aufweist, deren Abstand von der Oberseite eines Trägerelements (20) größer ist als die Dicke des überdeckten Randabschnitts (22) eines Bauelements (12), so daß zwischen der Oberseite eines überdeckten Bauelements (12) und der Unterseite eines überdeckenden Bauelements (14) ein Luftspalt (40) frei bleibt und daß wenigstens ein Sicherungselement (46) vorgesehen ist, um ein montiertes Bauelement (12) gegen Abheben und Verschiebung in Richtung der Längsachse des Trägerelements (20) auf diesem zu fixieren.

## Beschreibung

Die Erfindung betrifft ein Befestigungssystem für schuppenartig überdeckend verlegbare plattenförmige Bauelemente, insbesondere für photovoltaische Module, wobei für jedes plattenförmige Bauelement zumindest zwei parallel zueinander angeordnete Trägerelemente vorgesehen sind, wobei der überdeckte Randabschnitt eines überdeckten plattenförmigen Bauelements unterhalb des überdeckenden Randabschnitts des benachbarten überdeckenden plattenförmigen Bauelements auf dem Trägerelement aufliegt und wobei die Trägerelemente Halteelemente aufweisen, die den überdeckenden Rand des plattenförmige Bauelements zu umgreifen vermögen.

Aus der DE-C 174 12 309 ist ein derartiges Befestigungssystem bekannt für ein Photovoltaiksystem, das als Baukastensystem in eine Dacheindeckung aus kleinformatigen Dacheindeckungsplatten integrierbar ist. Dabei sind die photovoltaischen Module in ihren Abmessungen auf die Systemdeckbreite und die Decklänge der Dacheindeckungsplatten abgestimmt, so daß sie diese ersetzen. Es handelt sich also um ein sogenanntes In-Dach-System. Die photovoltaischen Module liegen auf einzelnen Trägerelementen auf, die parallel zu den Modulen schuppenartig übereinander angeordnet sind.

Der Erfindung liegt die Aufgabe zugrunde, ein Befestigungssystem zur Verfügung zu stellen, das unabhängig von der Unterkonstruktion montierbar ist, für große plattenförmige Bauelemente mit einer Fläche von jeweils mehr als 0,5 m² geeignet ist und die plattenförmigen Bauelemente gegen Ablösen sichert. Das Befestigungssystem soll die Montage, insbesondere von photovoltaischen Modulen, auch nachträglich auf einem eingedeckten Schrägdach oberhalb der Dacheindeckungsplatten ermöglichen, von den Abmessungen der Dacheindeckungsplatten unabhängig sein und soll die Montage der plattenförmigen Bauelemente sowohl vom First her als auch von der Traufe her ermöglichen.

Zur Lösung der Aufgabe wird vorgeschlagen, daß die Trägerelemente ein in einer Ebene liegendes Trägersystem bilden, daß das Halteelement für den überdeckenden Randabschnitt eines Bauelements eine von der Oberseite des Trägerelements beabstandete Auflagefläche aufweist, deren Abstand von der Oberseite des Trägerelements größer ist als die Dicke des überdeckten Randabschnitts eines plattenförmigen Bauelements, so daß zwischen der Oberseite eines überdeckten plattenförmigen Bauelements und der Unterseite eines überdeckenden plattenförmigen Bauelements ein Luftspalt frei bleibt und daß wenigstens ein Sicherungselement vorgesehen ist, das den überdeckten Randabschnitt eines montierten überdeckten plattenförmigen Bauelements gegen Verschiebung in Richtung der Längsachse des Trägerelements auf diesem zu fixieren vermag.

Zur Bedeckung einer möglichst großen Fläche mit plattenförmigen Bauelementen sind die einzelnen Trägerelemente zu einem langen durchgehenden Trägern verlängerbar, so daß eine Mehrzahl von plattenförmigen Bauelementen auf einem Träger befestigbar sind. Zumindest zwei parallel zueinander angeordnete Träger bilden ein in einer Ebene liegendes Trägersystem. Die schuppenartig überdeckend verlegten plattenförmigen Bauelemente sind geneigt zu den Trägerelementen angeordnet. Entsprechend den baulichen Gegebenheiten können mehrere Einheiten parallel zueinander montiert werden.

Die Träger können an fluchtend zur Längsachse der Träger angeordneten mit der Unterkonstruktion verbundenen Stützen befestigt werden, so daß ein Abheben der Träger von den Stützen nicht möglich ist.

Die Ebene des Trägersystems kann oberhalb einer Dacheindeckung liegen, so daß das Befestigungsystem unabhängig von baulichen Gegebenheiten der Unterkonstruktion montiert werden kann. Dadurch ist auch die nachträgliche Montage beispielsweise auf einem eingedeckten Schrägdach möglich.

Bei einer großen mit plattenförmigen Bauelementen bedeckten Fläche können infolge von Windeinwirkung sehr hohe Kräfte auftreten, die sogar zum Bruch eines plattenförmigen Bauelements führen können. Um die Windkräfte in beherrschbaren Grenzen zu halten, wird zwischen der Oberseite eines überdeckten plattenförmigen Bauelements und der Unterseite eines überdeckenden plattenförmigen Bauelements ein Luftspalt gebildet, durch den bei Windeinwirkung ein Druckausgleich zwischen Oberseite und Unterseite der plattenförmigen Bauelemente erfolgt. Die Höhe des Luftspaltes soll wenigstens 1/100 der Decklänge eines plattenförmigen Bauelements betragen.

Bei der Montage wird ein plattenförmiges Bauelement mit seinem überdeckten Randabschnitt unter die Auflagefläche geschoben, so daß der gegenüberliegende überdeckende Rand unter den diesen umgreifenden Abschnitt des dort angeordneten Halteelements eingeschoben werden kann.

Anschließend wird das Sicherungselement betätigt, um den überdeckten Randabschnitt gegen Verschiebung in Richtung der Längsachse des Trägerelements zu fixieren. Das Sicherungselement kann Bestandteil des Halteelements sein oder als separates Teil ausgeführt sein. Im zweiten Fall wird das Sicherungselement unter das Halteelement eingeschoben.

Das Halteelement oder das Sicherungselement kann gleichzeitig den überdeckten Randabschnitt gegen Abheben sichern. Auf diese Weise ist jedes einzelne plattenförmige Bauelement in seiner Position gesichert. Ein Verschieben in rechtwinkliger Richtung zum Träger kann zusätzlich durch Auflagen mit hohem Reibungskoeffizient, insbesondere durch schaumgummiartige Auflagen im Bereich der Halteelemente verhindert werden.

Da auf dem aus einzelnen Trägerelementen zusammengesetzten durchgehenden Träger die Halteelemente in der Abmessung eines plattenförmigen Bauelements entsprechenden Abständen befestigt sind, kann die Montage der plattenförmigen Bauelemente sowohl von der überdeckenden als auch von der überdeckten Seite her erfolgen. Ebenso ist es möglich, ein einzelnes plattenförmiges Bauteil auszuwechseln ohne die benachbarten überdeckenden plattenförmigen Bauteile demontieren zu müssen. Dies ist ein besonderer Vorteil, wenn beispielsweise ein photovoltaisches Modul ausgewechselt werden muß.

Das erfindungsgemäße Befestigungssystem ist unabhängig von Systemabmessungen der Unterkonstruktion, insbesondere von den Abmessungen überdeckter Dachpfannen. Lediglich der seitliche Abstand der Trägerelemente muß der Positionierung der Stützen angepaßt werden und soll etwa im Bereich der Viertelpunkte der Breite der plattenförmigen Bauelemente liegen. Die Positionen der Befestigung der Trägerelemente an den Stützen in Längsrichtung der Trägerelemente sind an durch die Unterkonstruktion vorgegebene Abstände der Stützen variabel anpaßbar.

Das Befestigungssystem ist stabil und korrosionsbeständig, wenn das Trägerelement im Querschnitt ein offenes Profil aufweist, denn in dem offenen Profil kann sich auf Dauer keine Feuchtigkeit ansammeln.

Zur Befestigung eines Trägerelements an einer von der Unterkonstruktion ausgehenden Stütze weist ein Trägerelement zumindest in einer seiner Seitenwangen ein Langloch auf.

An der Stütze kann das Trägerelement seitlich befestigt werden, wenn es beispielsweise einen etwa C-förmigem Querschnitt aufweist. In das Trägerelement kann ein Kulissenstein eingeschoben sein, der ein Muttergewinde für eine die Stütze durchsetzende Schraube aufweist.

Vorteilhafterweise ist das Trägerelement im Querschnitt als U-Profil ausgebildet, das mit oben liegender Basis montierbar ist. Das Trägerelement bildet mit anderen Worten ein auf dem Kopf stehendes U, dessen Unterseite offen und dessen Oberseite geschlossen ist.

Das Trägerelement kann von oben auf eine Stütze aufgesetzt werden und mit mittels einer durchgehenden Schraube befestigt werden, wenn das U-förmige Trägerelement in beiden Schenkeln einander gegenüberliegende Langlöcher aufweist.

Vorteilhafterweise sind in Längsrichtung des Trägerelements mehrere Langlöcher angeordnet, so daß bei der Montage eines langen Trägers auf mehreren Stützen stets jeweils eine Befestigung möglich ist. Stege zwischen den Langlöchern verhindern ein Abgleiten des Trägers bei der Montage, wenn die Schrauben noch nicht angezogen sind, und bieten Sicherheit, falls sich im Laufe der Zeit eine Schraube lockern sollte.

Eine einfache und preisgünstige Ausführung des Halteelements ist möglich, wenn das Halteelement auf der Oberseite des Trägerelements befestigt ist. Dies erfolgt bereits werkseitig, so daß auf der Baustelle keine Montagearbeiten anfallen.

Das Sicherungselement kann in einfacher Weise als Blechbiegeteil ausgeführt sein, das unter das Halteelement für das überdeckende plattenförmige Bauelement einschiebbar ist und Fixierelemente aufweist, die den überdeckten Rand des überdeckten plattenförmigen Bauelements beabstandet vom Halteelement zu fixieren vermögen. Es versteht sich, daß das Sicherungselement auch als Formteil aus Kunststoff ausgebildet sein kann. Vorteilhafterweise füllt das Sicherungselement die Höhe des Luftspaltes aus, so daß es den überdeckten Rand des plattenförmigen Bauelements gegen Abheben sichert.

Als Stütze kann beispielsweise eine aus der DE-C 26 26 181 bekannte Dacheindeckungsplatte verwendet werden, die an der Dachunterkonstruktion befestigt ist.

Bei der Montage auf einem Schrägdach kann der Einbau derartiger Dacheindeckungsplatten vermieden werden, wenn die Stütze den Überdeckungsbereich zwischen überdeckend verlegten Dachpfannen durchsetzen kann. Derartige Stützen können auf einem bereits eingedeckten Schrägdach leicht an den gewünschten Stellen nachträglich montiert werden.

Die Montage einer derartigen Stütze ist besonders einfach, wenn diese einen etwa U-förmigen Fußteil aufweist, der den kopfseitigen Rand einer Dachpfanne und eine darunter angeordnete Dachlatte der Dachunterkonstruktion elastisch federnd zu umgreifen vermag und an der Dachlatte vorzugsweise mittels Widerhaken fixierbar ist. Die vorstehend beschriebene Stütze kann aus Flachmaterial hergestellt sein.

In der Zeichnung ist ein bevorzugtes Ausführungsbeispiel der Erfindung dargestellt, das im folgenden näher erläutert wird.

Es zeigt
- Fig. 1: ein erfindungsgemäßes Befestigungssystem in perspektivischer Montagezeichnung,
- Fig. 2: ein Trägerelement des Befestigungssystems aus Fig. 1 in der Seitenansicht,
- Fig. 3: den Überdeckungsbereich zweier montierter plattenförmiger Bauelemente im Schnitt,
- Fig. 4: ein Auflageelement in der Seitenansicht,
- Fig. 5: ein Sicherungselement in perspektivischer Darstellung,
- Fig. 6: das Sicherungselement aus Fig. 5 in der Draufsicht,
- Fig. 7: das Sicherungselement aus Fig. 5 in der Seitenansicht und
- Fig. 8: eine Stütze in perspektivischer Darstellung.

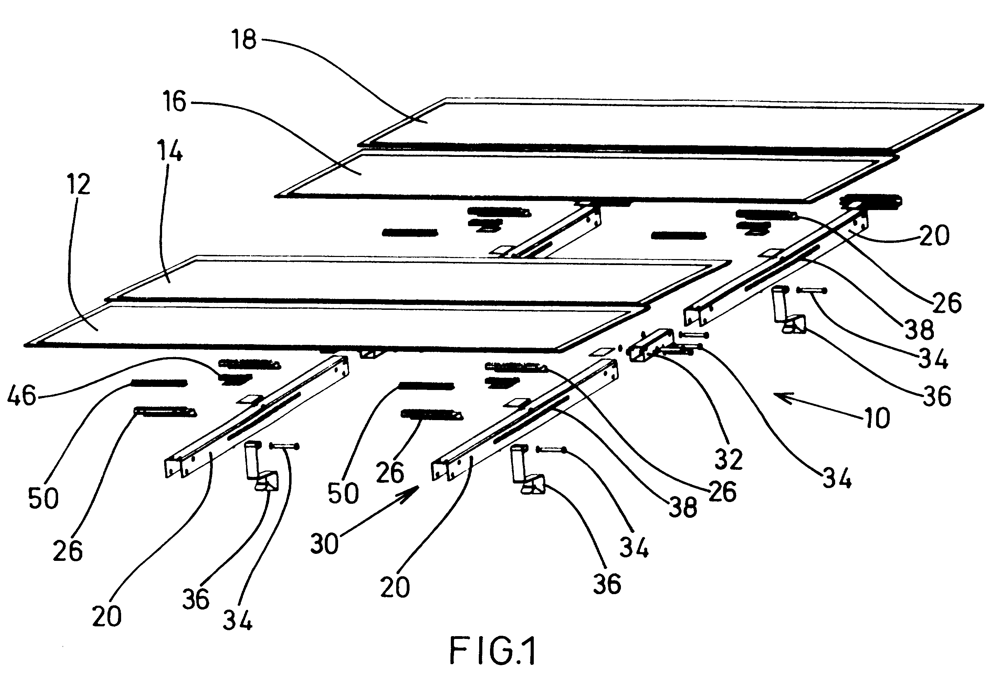

In Fig. 1 ist das Befestigungssystem 10 für plattenförmige Bauelemente 12, 14, 16, 18 perspektivisch dargestellt. Jedes der plattenförmigen Bauelemente 12, 14, 16, 18 mit den Abmessungen von 146 * 60 cm, also mit einer Fläche von 0,9 m², wird von zwei parallel zueinander angeordneten Trägerelementen 20 getragen, die im Querschnitt als U-Profil ausgebildet sind und mit oben liegender Basis montierbar sind. Das Trägerelement 20 besteht aus abgewinkeltem Edelstahlblech von 2,5 mm Dicke. Die Breite des Trägerelements 20 beträgt 45 mm, die Höhe 48,5 mm und die Länge entspricht mindestens der Decklänge eines plattenförmigen Bauteils oder einem Vielfachen davon.

Der überdeckte Randabschnitt 22 eines überdeckten plattenförmigen Bauelements 12 liegt nach der Montage unterhalb des überdeckenden Randabschnitts 24 des benachbarten überdeckenden plattenförmigen Bauelements 14 auf dem Trägerelement 20 auf. Auf den Oberseiten der Trägerelemente 20 sind Halteelemente 26 aufgenietet. Das Halteelement 26 vermag den überdeckenden Rand 28 eines plattenförmigen Bauelements 12 zu umgreifen.

Ein Trägerelement 20 ist mit zumindest einem weiteren in seiner Längsachse zu verlegenden Trägerelement 20 verlängerbar, um einen durchgehenden langen Träger 30 zu bilden. So bilden zwei 113 cm lange Trägerelemente 20 den 226 cm langen Träger 30. Zur Verlängerung ist jeweils ein Verlängerungselement 32 vorgesehen, das einen rechteckigen Querschnitt aufweist und in den Innenraum der zu verbindenden Trägerelemente 20 eingebracht und mittels die Schenkel durchsetzender Schrauben 34 befestigt werden kann.

Der Träger 30 ist an in seiner Längsachse fluchtend angeordneten Stützen 36 befestigbar. Jedes Trägerelement 20 kann auf eine Stütze 36 aufgesetzt werden. In beiden Schenkeln eines Trägerelements 20 sind einander gegenüberliegende Langlöcher 38 angeordnet, so daß jedes Trägerelement 20 an der zugehörigen Stütze 36 befestigt werden kann.

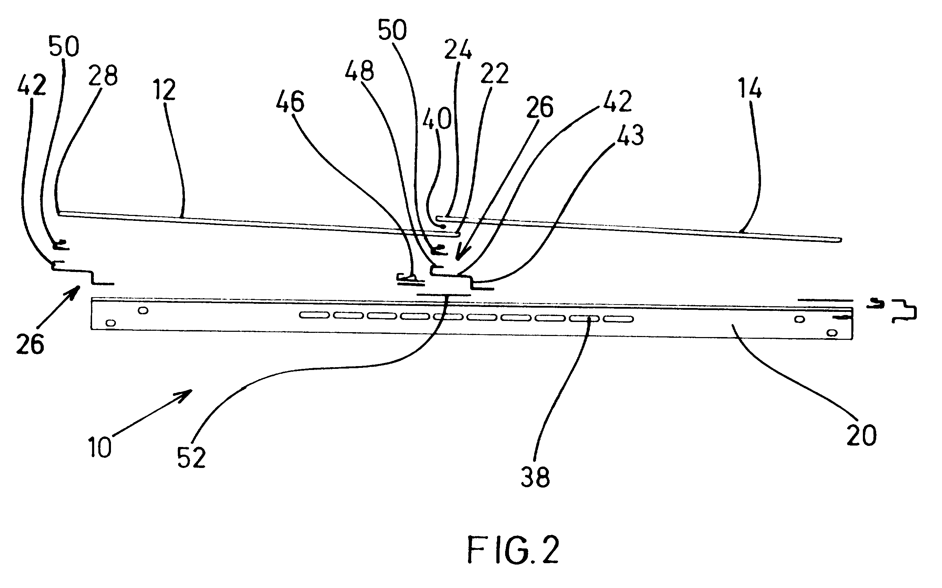

Fig. 2 zeigt das Trägerelement 20 des Befestigungssystems 10 in der Seitenansicht. Das 113 cm lange Trägerelement 20 ist zur Aufnahme von zwei 60 cm langen plattenförmigen Bauelementen mit 3,5 cm Überdeckung vorgesehen. Das Halteelement 26 weist eine von der Oberseite des Trägerelements 20 beabstandete Auflagefläche 42 auf, deren Abstand von der Oberseite des Trägerelements 20 größer ist als die Dicke des überdeckten Randabschnitts 22 eines plattenförmigen Bauelements 12, so daß zwischen der Oberseite des überdeckten plattenförmigen Bauelements 12 und der Unterseite des überdeckenden plattenförmigen Bauelements 14 ein Luftspalt 40 von wenigstens 1 cm Höhe frei bleibt. Zu diesem Zweck ist das Halteelement 26 stufenartig ausgebildet, wobei die Höhe der Stufe 43 größer ist als die Dicke des überdeckten Randabschnitts 22 des plattenförmigen Bauelements 12.

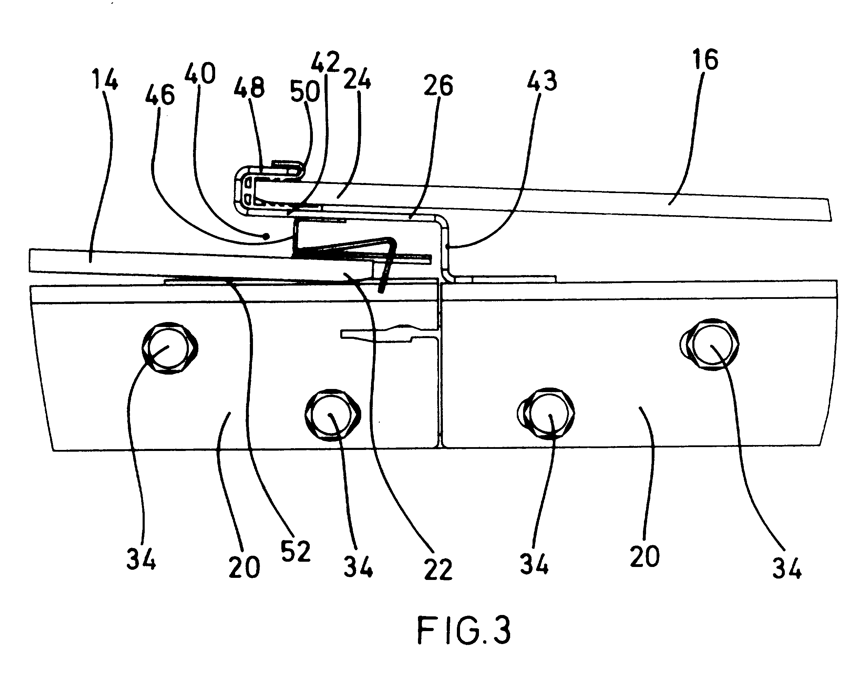

Fig. 3 zeigt im Schnitt den Überdeckungsbereich zweier montierter plattenförmiger Bauelemente, nämlich des überdeckten plattenförmigen Bauelements 14 und des überdeckenden plattenförmigen Bauelements 16 im Bereich der Verlängerung zweier Trägerelemente 20. Auf der Oberseite des Trägerelements 20 ist das Halteelement 26 befestigt. Nach der Montage der plattenförmigen Bauelemente 14, 16 ist ein Sicherungselement 46 in den Luftspalt 40 unter das Halteelement 26 und auf den überdeckten Randabschnitt 22 des überdeckten plattenförmigen Bauelements 14 eingeschoben, um dieses gegen Abheben und gegen Verschiebung in Richtung der Längsachse des Trägerelements 20 zum Halteelement 26 hin auf diesem zu fixieren. An seinem freien Ende an der Auflagefläche 42 weist das Halteelement 26 eine U-förmige Halterung 48 auf, um den überdeckenden Randabschnitt 24 des plattenförmigen Bauelements 16 zu umgreifen. Die Halterung 48 und die Auflagefläche 42 sind mit einem als Formteil aus Kunststoff ausgeführten Auflegeelement 50 ausgekleidet, welches gleichzeitig als Auflage für den überdeckenden Randabschnitt 24 des plattenförmigen Bauelements 16 bildet. Der überdeckte Randabschnitt 22 des überdeckten plattenförmigen Bauelements 14 liegt auf einer Kunststoff-Auflage 52 auf der Oberseite des Trägerelements 20 auf.

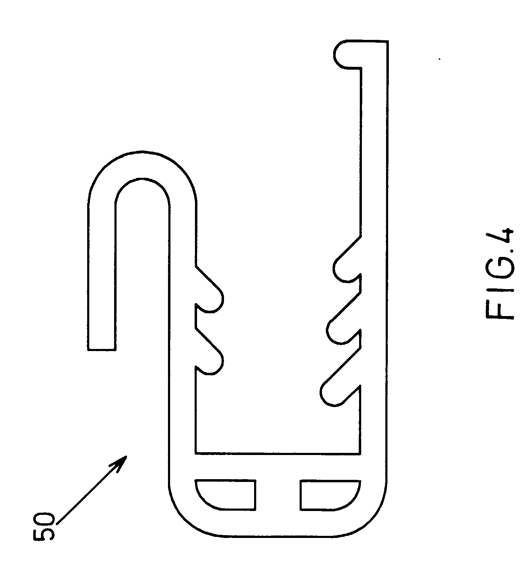

In Fig. 4 ist in der Seitenansicht das Auflageelement 50 dargestellt, das die U-förmige Halterung 48 des Halteelements 26 auskleidet. Das Auflageelement 50 ist etwa S-förmig ausgebildet und nimmt im Bereich seiner unteren Öffnung den überdeckenden Randabschnitt 24 eines plattenförmigen Bauelements 12, 14, 16, 18 und in seiner oberen Öffnung das Ende der U-förmige Halterung 48 des Halteelements 26 auf. Eine Schrägverzahnung im Bereich der unteren Öffnung erleichtert das Einführen des überdeckenden Randabschnitts 24 des plattenförmigen Bauelements, erschwert jedoch die Bewegung in umgekehrter Richtung.

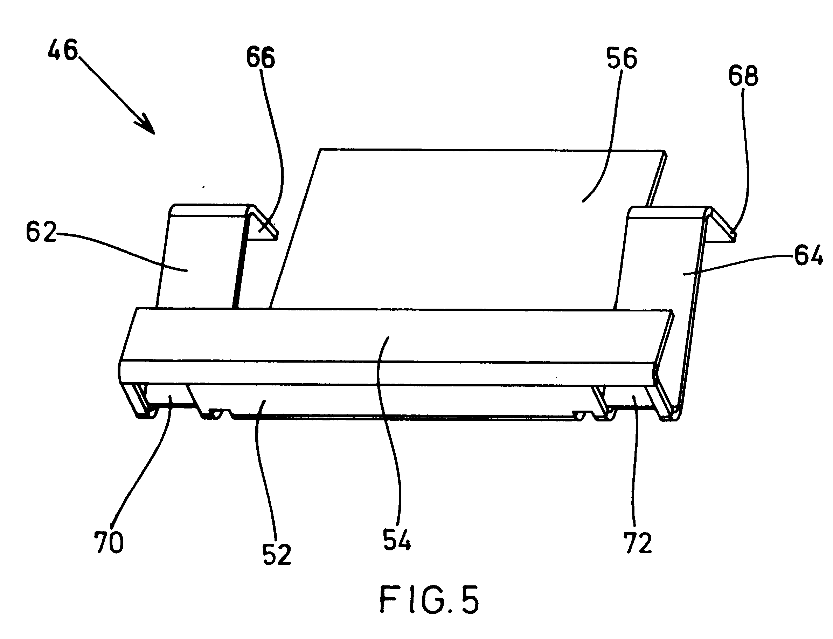

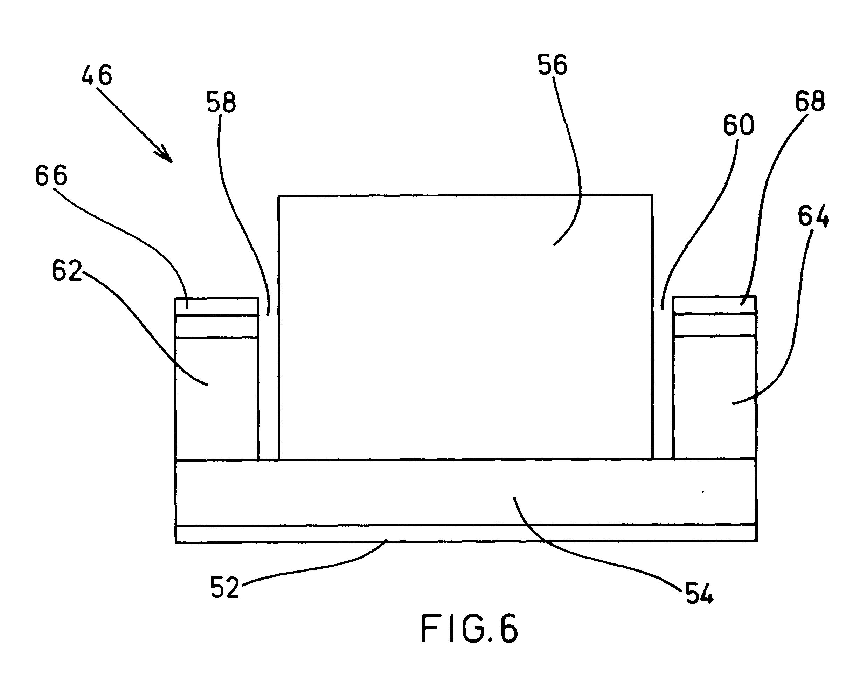

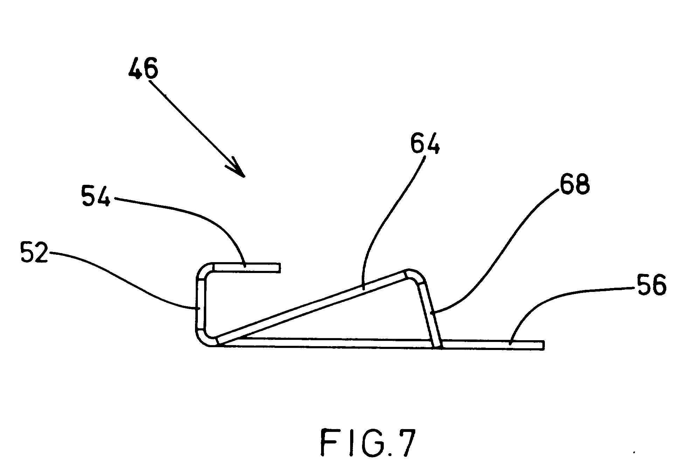

In Fig. 5 ist das Sicherungselement 46 perspektivisch, in Fig. 6 in der Draufsicht und in Fig. 7 in der Seitenansicht dargestellt. Das Sicherungselement 46 weist einen im wesentlichen U-förmigen Querschnitt auf mit ungleich langen Schenkeln. Die Höhe der Basis 52 ist gleich der Höhe des Luftspaltes 40. Der kürzere Schenkel 54 ist zur Anlage an der Unterseite eines Halteelements 26 bestimmt. Der längere Schenkel 56 ist zur Anlage an der Stufe 43 eines Halteelements 26 bestimmt, wie in Fig. 3 dargestellt. Der lange Schenkel 56 weist an jeder Seite einen bis zur Basis 52 verlaufenden Einschnitt 58, 60 auf, so daß zwei seitliche Laschen 62, 64 gebildet sind. Die Laschen 62, 64 sind im Lieferzustand in Richtung zum kürzeren Schenkel 54 hin schräg abgebogen, wie in Fig. 7 dargestellt. Die Endabschnitte 66, 68 der Laschen 62 bzw. 64 sind etwa rechtwinklig zum längeren Schenkel 56 hin abgebogen. Im Bereich der Laschen 62, 64 weist die Basis 52 Durchbrüche 70, 72 auf. Diese ermöglichen nach der Montage des Sicherungselements 46 durch Einstecken eines Werkzeuges, beispielsweise eines Schraubenziehers, das Abbiegen der Laschen 62, 64 zum Trägerelement 20 hin, wie in Fig. 3 dargestellt. Die abgewinkelten Endabschnitte 66, 68 bilden zusammen mit dem langen Schenkel 56 Fixierelemente und sichern das überdeckte plattenförmige Bauelement 12 gegen eine Verschiebung zum First hin. Die abgewinkelten Endabschnitte 66, 68 sind länger als die Dicke des überdeckten Randabschnitts 22 des plattenförmigen Bauelements 12, 14,16,18 so daß sie seitlich des Trägerelements 20 enden und somit das Sicherungselement 46 gegen seitliches Verschieben sichern.

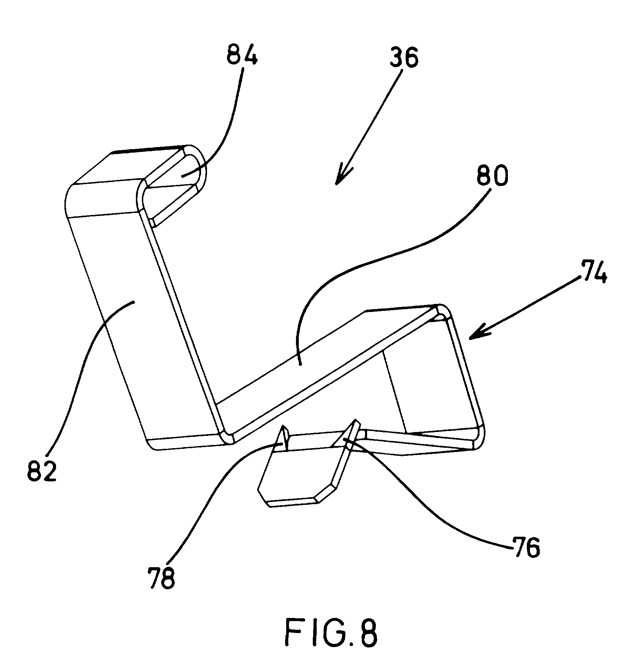

In Fig. 8 ist perspektivisch eine Stütze 36 aus Flachmaterial dargestellt, die für die Montage auf einem mit Dachpfannen eingedeckten Schrägdach besonders gut geeignet ist. Die Stütze 36 weist einen etwa U-förmig ausgeführten Fußteil 74 auf, der den kopfseitigen Rand einer Dachpfanne und eine darunter angeordnete Dachlatte der Dachunterkonstruktion elastisch federnd zu umgreifen vermag und an der Dachlatte mittels Widerhaken 76, 78 fixierbar ist.

Der obere Schenkel 80 kann den Überdeckungsbereich von in First-Trauf-Linie schuppenartig überdeckend verlegten Dachpfannen durchsetzen und ist an seinem Ende das Kopfteil 82 bildend abgewinkelt. Der Endabschnitt des Kopfteils 82 ist parallel zum oberen Schenkel 80 abgewinkelt und U-förmig zurückgebogen, um ein Langloch 84 zu bilden. Die Breite der Stütze 36 ist gleich dem Innenmaß des Trägerelements 20, so daß eine durch das Langloch 84 und eines der Langlöcher 38 geführte Schraube 34 fest angezogen werden kann. Die Ausbildung des Langlochs 84 im Kopf der Stütze 36 ermöglicht in jedem Fall den Durchtritt der Schraube 34 durch eines der Langlöcher 38 eines Trägerelements 20.

## Patentansprüche

1. Befestigungssystem (10) für schuppenartig überdeckend verlegbare plattenförmige Bauelemente (12, 14, 16, 18), insbesondere für photovoltaische Module, wobei für jedes plattenförmige Bauelement (12, 14, 16, 18) zumindest zwei parallel zueinander angeordnete Trägerelemente (20) vorgesehen sind, wobei der überdeckte Randabschnitt (22) eines überdeckten plattenförmigen Bauelements (12) unterhalb des überdeckenden Randabschnitts (24) des benachbarten überdeckenden plattenförmigen Bauelements (14) auf dem Trägerelement (20) aufliegt und wobei die Trägerelemente (20) Halteelemente (26) aufweisen, die den überdeckenden Rand (28) des plattenförmigen Bauelements (12) zu umgreifen vermögen,
**dadurch gekennzeichnet,**
daß die Trägerelemente (20) ein in einer Ebene liegendes Trägersystem bilden,
daß das Halteelement (26) für den überdeckenden Randabschnitt (24) eines Bauelements (12) eine von der Oberseite des Trägerelements (20) beabstandete Auflagefläche (42) aufweist, deren Abstand von der Oberseite des Trägerelements (20) größer ist als die Dicke des überdeckten Randabschnitts (22) eines plattenförmigen Bauelements (12), so daß zwischen der Oberseite eines überdeckten plattenförmigen Bauelements (12) und der Unterseite eines überdeckenden plattenförmigen Bauelements (14) ein Luftspalt (40) frei bleibt und
daß wenigstens ein Sicherungselement (46) vorgesehen ist, das den überdeckten Randabschnitt (22) eines montierten plattenförmigen Bauelements (12) gegen Verschiebung in Richtung der Längsachse des Trägerelements (20) auf diesem zu fixieren vermag.

2. Befestigungssystem nach Anspruch 1,
**dadurch gekennzeichnet,**
daß das Trägerelement (20) im Querschnitt ein offenes Profil aufweist.

3. Befestigungssystem nach Anspruch 2,
**dadurch gekennzeichnet,**
daß das Trägerelement (20) zumindest in einer seiner Seitenwangen ein Langloch (38) aufweist zur Befestigung an einer von der Unterkonstruktion ausgehenden Stütze (36).

4. Befestigungssystem nach den Ansprüchen 2 oder 3,
**dadurch gekennzeichnet,**
daß das Trägerelement (20) im Querschnitt als U-Profil ausgebildet ist, das mit oben liegender Basis montierbar ist, so daß es eine geschlossene Oberseite aufweist.

5. Befestigungssystem nach Anspruch Anspruch 4,
d a d u r c h gekennzeichnet,
daß das Trägerelement (20) in beiden Schenkeln einander gegenüberliegende Langlöcher (38) aufweist.

6. Befestigungssystem nach einem der Ansprüche 1 bis 5,
**dadurch gekennzeichnet,**
daß das Halteelement (26) auf der Oberseite des Trägerelements (20) befestigt ist.

7. Befestigungssystem nach einem der Ansprüche 1 bis 6,
**dadurch gekennzeichnet,**
daß das Sicherungselement (46) unter das Halteelement (26) für das überdeckende plattenförmige Bauelement (14) einschiebbar ist und Fixierelemente (56, 66, 68) aufweist, die das überdeckte plattenförmige Bauelement (12) beabstandet vom Halteelement (26) zu fixieren vermögen.

8. Befestigungssystem nach einem der Ansprüche 3 bis 7,
**dadurch gekennzeichnet,**
daß die Stütze (36) den Überdeckungsbereich zwischen überdeckend verlegten Dachpfannen durchsetzen kann.

9. Befestigungssystem nach Anspruch 8,
**dadurch gekennzeichnet,**
daß die Stütze (36) einen etwa U-förmig ausgeführten Fußteil (74) aufweist, der den kopfseitigen Rand einer Dachpfanne und eine darunter angeordnete Dachlatte der Dachunterkonstruktion elastisch federnd zu umgreifen vermag und an der Dachlatte vorzugsweise mittels Widerhaken (76, 78) fixierbar ist.

10. Befestigungssystem nach Anspruch 8 oder 9,
**dadurch gekennzeichnet,**
daß die Stütze (36) aus Flachmaterial besteht.
